# EUROPÄISCHE PATENTSCHRIFT

(11) **EP 4 484 815 B1**
(45) Veröffentlichungstag und Bekanntmachung des Hinweises auf die Patenterteilung: **22.07.2026**
(21) Anmeldenummer: 23181675.2
(22) Anmeldetag: 27.06.2023
(51) Int. Cl.: F16L 27/11, F16L 27/12, F16L 39/00, F16L 59/14, F16L 59/18, F16L 59/065, F16L 51/02, F16L 51/04, F17C 13/00

(54) **ANSCHLUSSSTUTZEN FÜR EINE KRYOLEITUNG**
CONNECTING PIECE FOR A CRYOGENIC CONDUIT
TUBULURE DE RACCORDEMENT POUR UNE CONDUITE CRYOGÉNIQUE

(43) Veröffentlichungstag der Anmeldung: 01.01.2025
(73) Patentinhaber: SAG Group B.V., 2222 AK Katwijk (NL)
(72) Erfinder: EIBÖCK, Martin, 5760 Saalfelden (AT); OBERTHALER, Klaus, 5603 Kleinarl (AT)
(74) Vertreter: Weiser Voith Gugler Patentanwälte Partnerschaft

(56) Entgegenhaltungen:
- EP-A1- 4 235 001
- US-A- 3 068 026
- US-A- 3 843 171
- US-A1- 2019 195 399
- US-A1- 2023 139 421

## Beschreibung

Die vorliegende Erfindung betrifft einen Anschlussstutzen für eine Kryoleitung, die zwecks Vakuumisolierung mit Umfangsspiel durch ein evakuierbares Rohr geführt ist.

Kryofluide wie verflüssigter Wasserstoff oder verflüssigtes Erdgas (liquefied natural gas, LNG) werden häufig als Kraftstoffe mit hoher Energiedichte für den Betrieb von Fahrzeugen, z.B. LKWs oder Bussen, verwendet. Die Kryofluide werden dabei in Kryotanks gespeichert, die z.B. an beiden Seiten des Fahrzeugs am Chassis montiert werden. Zum einfachen Befüllen solcher Doppeltanks von einer Fahrzeugseite aus werden Kryoleitungen zwischen den Tanks bzw. deren Füll- und Entnahmearmaturen benötigt, und Anschlussstutzen für diese Kryoleitungen.

Zur Aufrechterhaltung der Tiefsttemperatur der Kryofluide, z.B. weniger als -252 °C im Falle von flüssigem Wasserstoff oder weniger als -161 °C im Falle von LNG, müssen die Kryoleitungen und ihre Anschlussstutzen ausgezeichnet wärmeisoliert sein. Dazu werden insbesondere bei Flüssigwasserstoff meist Doppelwandkonstruktionen mit Vakuumisolierung verwendet.

Der Einsatz solcher Konstruktionen an einem Fahrzeugchassis stellt jedoch eine zusätzliche Herausforderung dar, denn die Kryoleitungen und Anschlussstutzen müssen Vibrationen und Verwindungen des Fahrzeugchassis, welche signifikante Lageänderungen der verbundenen Komponenten zur Folge haben, widerstehen können. Aus US 3 068 026 A oder US 2023/139421 A1 ist bekannt, Lageänderungen im Bereich der Anschlüsse doppelwandiger Kryoleitungen durch flexible Elemente, wie Faltenbalgabschnitte, auszugleichen. Jedoch ist in beiden Fällen der jeweilige Anschlussstutzen schwierig handhabbar, insbesondere bei einer Fehlstellung zwischen Innen- und Außenteil des Anschlussstutzens oder seines Gegenstücks. Zum sicheren dichten Anschließen der Kryoleitung ist jedoch eine möglichst einfache Handhabung gefordert.

Die Erfindung setzt sich zum Ziel, einen Anschlussstutzen für eine Kryoleitung zu schaffen, welcher diese Anforderungen erfüllt.

Dieses Ziel wird mit einem Anschlussstutzen für eine Kryoleitung erreicht, die zwecks Vakuumisolierung mit Umfangsspiel durch ein evakuierbares Rohr geführt ist, wobei der Anschlussstutzen einen Innenstutzen und einen diesen mit Abstand etwa koaxial umgebenden Außenstutzen aufweist, wobei der Innenstutzen mit dem Kryoleitungsende und der Außenstutzen mit dem Rohrende verbindbar ist, wobei Innen- und Außenstutzen über eine Ringstruktur miteinander verbunden sind, wobei die Ringstruktur einen Faltenbalgabschnitt enthält, und wobei sich der Anschlussstutzen dadurch auszeichnet, dass die Ringstruktur mit dem Außenstutzen über eine drehfeste Kupplung axial ein- und auswärtsbeweglich verbunden ist.

Das freie Ende des Innenstutzens kann für den Kryofluidanschluss der an den Anschlussstutzen anzuschließenden Komponente verwendet werden, und das freie Ende des Außenstutzens errichtet gegenüber dem Innenstutzen einen umgebenden ringförmigen Zwischenraum, der wieder zur Vakuumisolierung verwendet werden kann. Der Außenstutzen kann überdies die Hauptlast der mechanischen Verbindung zur angeschlossenen Komponente übernehmen und so den Innenstutzen, der zur Verbindung des Kryofluids dient, entlasten. Der Faltenbalgabschnitt gleicht dabei die Bewegungen oder Fehlstellungen zwischen Innen- und Außenstutzen aus, die beim Verbinden des jeweiligen Anschlussstutzens mit der jeweiligen Komponente auftreten können. Der Anschlussstutzen der Erfindung schafft damit eine vakuumisolierbare Doppelwandstruktur, welche jedweden Relativbewegungen der angeschlossenen Komponente und damit auch starken Erschütterungen und Verwindungen eines Fahrzeugs schadlos folgen kann. Damit wird jederzeit eine vollständige Vakuum-Wärmeisolierung des Kryofluids gewährleistet. Durch die drehfeste Kupplung kann der Außenstutzen z.B. zurückgeschoben werden, um das freie Ende des Innenstutzens freizulegen, sodass dieses in einem ersten Schritt mit dem Kryofluidanschluss verbunden werden kann. Anschließend kann der Außenstutzen z.B. wieder vorgeschoben werden, um ihn an der Komponente, welche den Kryofluidanschluss darbietet, mechanisch festzulegen.

Besonders günstig ist es, wenn die Ringstruktur Innen- und Außenstutzen dicht miteinander verbindet. Dadurch werden der Ringraum zwischen Innen- und Außenstutzten einerseits und der Zwischenraum zwischen Kryoleitung und Rohr anderseits voneinander getrennt, so dass sie gesondert isolierbar, insbesondere evakuierbar, sind. Alternativ könnte die Ringstruktur Innen- und Außenstutzen gasdurchlässig miteinander verbinden, so dass der Ringraum zwischen Innen- und Außenstutzen einerseits und der Zwischenraum zwischen Kryoleitung und Rohr anderseits druckverbunden und gemeinsam evakuierbar sind, falls gewünscht.

Bevorzugt ist die Ringstruktur gegenüber den freien Enden von Innen- und Außenstutzen zurückversetzt. Dadurch sind die freien Enden von Innen- und Außenstutzen für den Anschluss leichter zugänglich.

Der Faltenbalgabschnitt kann an jeder geeigneten Stelle in der Ringstruktur liegen, beispielsweise in Form einer zickzack gefalteten Ringscheibe, die den Ringraum zwischen Innen- und Außenstutzen ausfüllt. In einer besonders vorteilhaften Ausführungsform der Erfindung ist die Einhüllende des Faltenbalgabschnitts etwa zylinderförmig und verläuft koaxial und mit Abstand zum Innen- und Außenstutzen. Dadurch kann ein besonders großer Bewegungsspielraum zwischen Innen- und Außenstutzen geschaffen werden.

In allen ernannten Ausführungsformen ist der Außenstutzen optional mit einer Faltenbalgmanschette versehen, über welche das Rohrende mit dem Außenstutzen verbindbar ist. Damit kann sich das angeschlossenen Rohr gegenüber der darin enthaltenen Kryoleitung bewegen und letztere z.B. als flexibler Schlauch ausgeführt werden, welcher sich beim Auseinanderziehen der Faltenbalgmanschette strecken und beim Zusammenziehen der Faltenbalgmanschette krümmen kann. Eine mit dem erfindungsgemäßen Anschlussstutzen versehene Kryoleitung kann dadurch auch jedweden Lage- bzw. Entfernungsänderungen der angeschlossenen Komponenten folgen.

Besonders günstig ist es, wenn die Faltenbalgmanschette aus Metall gefertigt ist, bevorzugt aus Edelstahl. Dies verleiht der Faltenbalgmanschette eine federnde Ruhelage, aus der sie auseinander- und zusammengezogen werden kann, und gleichzeitig hohe Gasdichtigkeit und Bruchdehnung.

Bevorzugt weist die Kupplung einen Außenzahnkranz am einen der beiden Teile Ringstruktur und Außenstutzen und einen mit dem Außenzahnkranz in Eingriff bringbaren Innenzahnkranz am anderen der beiden Teile Ringstruktur und Außenstutzen auf. Damit kann die Rotationslage der Drehfixierung der Kupplung durch Auswählen der Eingriffsstellung der Zahnkränze beliebig eingestellt werden. Bevorzugt hat dazu die Ringstruktur einen Innenabsatz und der Außenstutzen einen daran bei seiner Auswärtsbewegung anschlagenden Außenabsatz.
In allen Ausführungsformen ist es ferner besonders günstig, wenn die Ringstruktur eine ringförmige Vertiefung hat, in welche der Außenstutzen bei seiner Einwärtsbewegung eintauchen kann. Eine Seitenwand der Vertiefung kann dann beispielsweise für einen zylinderförmigen und koaxial zu Innen- und Außenstutzen verlaufen den Faltenbalgabschnitt mitverwendet werden. Alternativ kann die ringförmige Vertiefung zwischen dem Faltenbalgabschnitt und der Kupplung liegen.

Gemäß einem vorteilhaften Merkmal der Erfindung können die freien Enden von Innen- und Außenstutzen jeweils einen Endflansch mit einer Überwurfmutter haben. Der Innenstutzen kann dann mit dem Kryofluidanschluss der anzuschließenden Komponente verschraubt werden, und der Außenstutzen mit einen um den Kryofluidanschluss herum umlaufenden Schraubanschluss der Komponente, um die mechanische Hauptlast aufzunehmen. Der Ringraum zwischen Innen- und Außenstutzen ist damit gleichzeitig abgedichtet und kann zur Wärmeisolierung evakuiert werden.

Die Erfindung wird nachstehend anhand eines in den beigeschlossenen Zeichnungen dargestellten Ausführungsbeispiels näher erläutert. In den Zeichnungen zeigt
Fig. 1 eine Verbindungsleitung mit zwei erfindungsgemäßen Anschlussstutzen in einem perspektivischem Längsschnitt; und
Fig. 2 einen der Anschlussstutzen der Verbindungsleitung von Fig. 1 in einem perspektivischen Längsschnitt vergrößert im Detail.

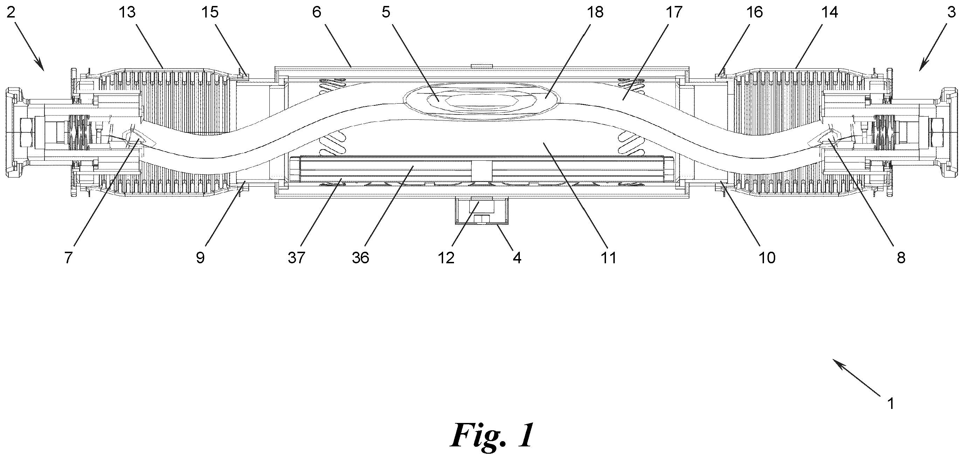

Fig. 1 zeigt eine Verbindungsleitung 1 für ein Kryofluid. Das Kryofluid kann beispielsweise Wasserstoff sein, der bei Temperaturen von bis zu -252 °C und darunter und einem Druck von bis zu 16 bar - oder mehr, je nach Behälterbauart - zumindest teilweise verflüssigt vorliegt, oder ein vergleichbares, in Verbrennungskraftmaschinen oder Brennstoffzellen einsetzbares Kryofluid, z.B. verflüssigtes Erdgas (liquefied natural gas, LNG) mit einer Temperatur von bis zu -161 °C und darunter. Das Kryofluid kann aber auch ein Kältemittel sein, beispielsweise Flüssigstickstoff, mit dem das Kühlsystem von Kühllastern betrieben wird, z.B. von Lebensmitteltransportern.

Die Verbindungsleitung 1 hat an ihren beiden Enden jeweils einen Anschlussstutzen 2, 3, mit dem sie dort an eine anzuschließende Komponente, z.B. einen Kraftstofftank, einen Kältemittelbehälter oder eine Armatur zum Befüllen oder Entnehmen von Kryofluid daraus, angeschlossen werden kann. Beispielsweise dient die Verbindungsleitung 1 zum Verbinden zweier an den gegenüberliegenden Seiten eines Lastkraftwagens (LKWs) montierten Wasserstofftanks, um diese gemeinsam von einer Fahrzeugseite her befüllen oder entleeren zu können.

Die Verbindungsleitung 1 wird dabei von den über die Anschlussstutzen 2, 3 angeschlossenen Komponenten mitgetragen. Alternativ oder zusätzlich hat sie an ihrer Außenseite eine Verankerung 4, über welche sie z.B. an einem Fahrzeugchassis befestigt werden kann. Die Verbindungsleitung 1 ist dadurch entweder an zwei Verankerungspunkten, nämlich den angeschlossenen Komponenten, die am Fahrzeugchassis montiert sind, oder an drei Verankerungspunkte, nämlich den beiden angeschlossenen Komponenten und der Verankerung 4, am Fahrzeugchassis fixiert.

Die Verbindungsleitung 1 ist eine evakuierbare Doppelwandkonstruktion aufgebaut aus einer inneren Kryoleitung in Form eines flexiblen Schlauchs 5 und einem diesen mit Umfangsspiel umgebenden starren Rohr 6. Die Enden 7, 8 des Schlauchs 5 sind mit den Enden 9, 10 des Rohrs 6 über jeweils einen der Anschlussstutzen 2, 3 dicht verbunden. Dadurch ist der Spiel- bzw. Zwischenraum 11 zwischen Schlauch 5 und Rohr 6 zwecks thermischer Isolierung des Schlauchs 5 evakuierbar, z.B. über eine verschließbare Evakuierungsöffnung 12 des Rohrs 6.

Zumindest eine der dichten Verbindungen zwischen dem jeweiligen Rohrende 9, 10 und dem jeweiligen Anschlussstutzen 2, 3, hier beide dichte Verbindungen, erfolgt über eine Faltenbalgmanschette 13, 14, die optional auch zum Anschlussstutzen 2, 3 gezählt werden kann. Das dem Anschlussstutzen 2 abgewandte Ende 15 der Faltenbalgmanschette 13 ist mit dem Rohrende 9 verbunden, und das dem Anschlussstutzen 3 abgewandte Ende 16 der Faltenbalgmanschette 14 ist mit dem Rohrende 10 verbunden. Wenn nur eine Faltenbalgmanschette z.B. zwischen dem Anschlussstutzen 2 und dem Rohrende 9 verwendet wird, kann das andere Rohrende 10 direkt mit dem anderen Anschlussstutzen 3 dicht verbunden sein.

Das Rohr 6 und die Faltenbalgmanschetten 13, 14 können z.B. aus Kunststoff gefertigt sein. Für Tiefsttemperaturfestigkeit werden sie aus Metall gefertigt, beispielsweise aus Edelstahl oder Aluminium. Die Faltenbalgmanschetten 13, 14 haben dadurch eine federnde Ruhestellung zwischen ihrer auseinandergezogenen und ihrer zusammengezogenen Stellung.

Die Längen des Schlauchs 5, des Rohres 6 und der Faltenbalgmanschetten 13, 14 sind so dimensioniert, dass in einer stärker auseinandergezogenen Stellung einer oder beider Faltenbalgmanschetten 13, 14 der Schlauch 5 weniger stark gekrümmt ist, beispielsweise gestreckt, und in einer zusammengezogenen Stellung einer oder beider Faltenbalgmanschetten 13, 14 der Schlauch 5 stärker gekrümmt ist. Beispielsweise zeigt Fig. 1 die Ruhestellung der Faltenbalgmanschetten 13, 14, in welcher der Schlauch 5 mehrfach gekrümmt durch das Rohr 6 verläuft. Beim Auseinanderziehen einer oder beider Faltenbalgmanschetten 13, 14 kann sich der Schlauch 5 strecken und beim Zusammenziehen einer oder beider Faltenbalgmanschetten 13, 14 stärker krümmen.

Dadurch können Relativbewegungen zwischen den durch die Verbindungsleitung 1 verbundenen Komponenten aufgenommen werden. Wenn die Verankerung 4 als dritter Verankerungspunkt verwendet wird, können die eine Faltenbalgmanschette 13 und der gekrümmte Schlauch 5 Relativbewegungen zwischen der Verankerung 4 und der einen Komponente und die andere Faltenbalgmanschette 14 und der gekrümmte Schlauch 5 Relativbewegungen zwischen der Verankerung 4 und der anderen Komponente ausgleichen.

Der Schlauch 5 ist aus einem flexiblen Material gefertigt, beispielsweise Kunststoff oder biegsamem Metall. Als Scheuerschutz gegenüber der Innenseite des Rohres 6 bei einer zu starken Krümmung des Schlauches 5 ist der Schlauch 5 optional mit einem scheuerfestem Mantel 17 versehen. Der Mantel 17 kann beispielsweise aus einem Gewebe, Gelege, Gewirke oder Vlies von Glasfasern gefertigt sein. Zwischen Schlauch 5 und Mantel 17 ist optional eine Schicht 18 aus einem thermisch isolierendem Material zwischengelegt. Beispielsweise ist die Schicht 18 durch eine Aluminiumfolie gebildet, die in mehreren Lagen rund um den Schlauch 5 gewickelt wird, wobei ein thermisch isolierendes Vlies zwischen den Lagen mitgewickelt wird.

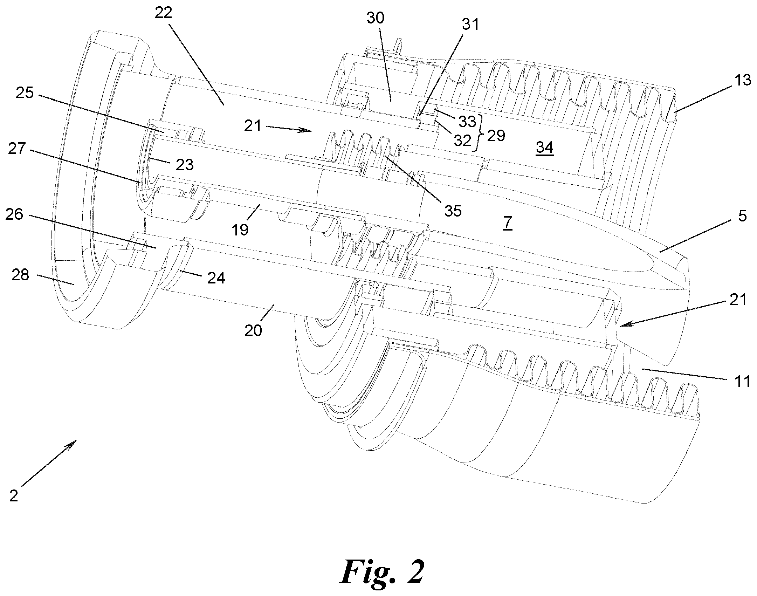

Der Aufbau eines der Anschlussstutzen 2, 3 wird nun anhand von Fig. 2 für den Anschlussstutzen 2 im Detail erläutert. Der Aufbau des Anschlussstutzens 3 ist analog.

Gemäß Fig. 2 umfasst der Anschlussstutzen 2 einen mit dem Schlauchende 7 verbindbaren Innenstutzen 19 sowie einen direkt oder über den Faltenbalgabschnitt 13, falls vorhanden, mit dem Rohrende 9 verbindbaren Außenstutzen 20. Innen- und Außenstutzen 19, 20 sind über eine Ringstruktur 21 miteinander verbunden. Die Ringstruktur 21 kann eine dichte Verbindung zwischen Innenstutzen 19 und Außenstutzen 20 errichten, wodurch der Zwischenraum 11 gesondert evakuierbar ist. Alternativ kann die Ringstruktur 21 gasdurchlässig sein, so dass der Zwischenraum 11 mit dem Ringraum 22 zwischen Innenstutzen 19 und Außenstutzen 20 druckverbunden und mit diesem gemeinsam evakuierbar ist, falls gewünscht.

Die Ringstruktur 21 ist gegenüber den freien Enden 23, 24 von Innen- und Außenstutzen 19, 20 in Richtung auf das Rohr 6 hin zurückversetzt, so dass die Enden 23, 24 für die anzuschließenden Komponenten, z.B. einen Fahrzeugtank oder eine Armatur, frei zugänglich sind. Zu diesem Zweck haben die freien Enden 23, 24 von Innen- und Außenstutzen 19, 20 z.B. jeweils einen Endflansch 25, 26 mit einer Überwurfmutter 27, 28. Damit kann der Innenstutzen 19 z.B. mit einem Kryofluidanschluss und der Außenflansch 20 z.B. mit einem lastaufnehmenden Gewinde verbunden werden.

Um das Herstellen dieser Verbindungen, insbesondere der Verschraubungen mittels der Überwurfmuttern 27, 28, zu erleichtern, kann die Ringstruktur 21 mit dem Außenstutzen 20 optional über eine axialbewegliche Kupplung 29 verbunden sein. Die Kupplung 29 erlaubt eine Ein- und Auswärtsbewegung des Außenstutzens 20 gegenüber der Ringstruktur 21 und dem damit verbundenen Innenstutzen 19, z.B. zum Zurückschieben des Außenstutzens 20 zum Freilegen des Endes 23 des Innenstutzens 19, um den Innenstutzen 19 mit einem Kryofluidanschluss mittels der Überwurfmutter 27 zu verschrauben. Anschließend wird der Außenstutzen 20 wieder vorgeschoben, um den Außenstutzen 20 mittels der Überwurfmutter 28 an der anzuschließenden Komponente zu fixieren.

Die Kupplung 29 umfasst einen Anschlag, der die Auswärtsbewegung des Außenstutzens 20 begrenzt. Dazu hat einer der Teile Außenstutzen 20 und Ringstruktur 21 (hier: die Ringstruktur 21) einen Innenabsatz 30 und der andere der Teile Außenstutzen 20 und Ringstruktur 21 (hier: der Außenstutzen 20) einen daran bei der Auswärtsbewegung des Außenstutzens 20 anschlagenden Außenabsatz 31.

Die Kupplung 29 kann drehbar oder drehfest ausgebildet sein. Bei einer drehfesten Kupplung 29 kann die Rotationslage der Drehfixierung einstellbar sein. Zur Einstellung kann beispielsweise der Außenstutzen 20 einen Außenzahnkranz 32 und die Ringstruktur 21 einen Innenzahnkranz 33 haben (oder umgekehrt), welche Zahnkränze ineinander eingreifen können und so die Drehfixierung der Kupplung 22 erreichen. Durch Einwärtsbewegen des Außenstutzens 20 können die Zahnkränze 32, 33 außer Eingriff gebracht und dann der Außenstutzen 20 gegenüber der Ringstruktur 21 verdreht werden, um eine andere Drehfixierungslage auszuwählen, in der der Außenstutzen 20 beim Auswärtsbewegen wieder drehfest einrastet. Die Ringstruktur 21 kann dazu eine ringförmige Vertiefung 34 haben, in welche der Außenstutzen 20 bei seiner Einwärtsbewegung eintauchen kann.

Wie in Fig. 2 gezeigt, kann die Ringstruktur 21 optional einen Faltenbalgabschnitt 35 haben, um Relativbewegungen zwischen dem Innenstutzen 19 und dem Außenstutzen 20, insbesondere Verkippungen oder Offsets zwischen ihren Längsachsen, auszugleichen. Dies kann nützlich sein, um Toleranzen zwischen einem Kryofluidanschluss, mit dem der Innenstutzen 19 verbunden ist, und einem Evakuier- und Lastanschluss, mit dem der Außenstutzen 20 verbunden ist, oder um allfällige Biegebewegungen des Innenstutzens 19 mit dem Schlauch 5, wenn er sich bewegt, zu kompensieren. Außerdem verlängert der Faltenbalgabschnitt 35 die Wärmeabbaustrecke vom kalten Stutzen 19 zur wärmeren Ringstruktur 21 und vermindert so den Wärmeeintrag in das kalte Medium.

Der in die Ringstruktur 21 integrierte Faltenbalgabschnitt 35 kann beispielsweise - so wie im Übrigen auch die Faltenbalgmanschetten 13, 14 - eine Einhüllende haben, die etwa zylinderförmig ist und koaxial und mit Radialabständen sowohl zum Innenstutzen 19 als auch zum Außenstutzen 20 verläuft.

Die ringförmige Vertiefung 34 der Ringstruktur 21 liegt im gezeigten Beispiel zwischen dem Faltenbalgabschnitt 35 und der Kupplung 29. Der Faltenbalgabschnitt 35 könnte jedoch an anderer Stelle der Ringstruktur 21 liegen.

Im Rohr 6, insbesondere entlang des Schlauches 5, kann ein Bindemittel 36 für Wasserstoffgas angeordnet werden. Das Bindemittel 36 kann beispielsweise in einem mit Gaseintritten versehenen Gitterkäfig 37 enthalten sein, der etwa stab- oder boltzenförmig neben dem Schlauch 5 im Rohr 6 über dessen gesamte Länge verläuft.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Anschlussstutzen für eine Kryoleitung, die zwecks Vakuumisolierung mit Umfangsspiel durch ein evakuierbares Rohr geführt ist, wobei der Anschlussstutzen (2, 3) einen Innenstutzen (19) und einen diesen mit Abstand etwa koaxial umgebenden Außenstutzen (20) aufweist, wobei der Innenstutzen (19) mit dem Kryoleitungsende (7, 8) und der Außenstutzen (20) mit dem Rohrende (9, 10) verbindbar ist, wobei Innen- und Außenstutzen (19, 20) über eine Ringstruktur (21) miteinander verbunden sind, und wobei die Ringstruktur (21) einen Faltenbalgabschnitt (35) enthält, **dadurch gekennzeichnet, dass** die Ringstruktur (21) mit dem Außenstutzen (20) über eine drehfeste Kupplung (29) axial ein- und auswärtsbeweglich verbunden ist.

2. Anschlussstutzen nach Anspruch 1, **dadurch gekennzeichnet, dass** die Ringstruktur (21) Innen- und Außenstutzen (19, 20) dicht miteinander verbindet.

3. Anschlussstutzen nach Anspruch 1 oder 2, **dadurch gekennzeichnet, dass** die Ringstruktur (21) gegenüber den freien Enden (23, 24) von Innen- und Außenstutzen (19, 20) zurückversetzt ist.

4. Anschlussstutzen nach einem der Ansprüche 1 bis 3, **dadurch gekennzeichnet, dass** die Einhüllende des Faltenbalgabschnitts (35) etwa zylinderförmig ist und koaxial und mit Abstand zum Innen- und Außenstutzen (19, 20) verläuft.

5. Anschlussstutzen nach einem der Ansprüche 1 bis 4, **dadurch gekennzeichnet, dass** der Außenstutzen (20) mit einer Faltenbalgmanschette (13, 14) versehen ist, über welche das Rohrende (9, 10) mit dem Außenstutzen (20) verbindbar ist.

6. Anschlussstutzen nach Anspruch 5, **dadurch gekennzeichnet, dass** die Faltenbalgmanschette (13, 14) aus Metall gefertigt ist, bevorzugt aus Edelstahl.

7. Anschlussstutzen nach einem der Ansprüche 1 bis 6, **dadurch gekennzeichnet, dass** die Kupplung (29) einen Außenzahnkranz (32) am einen der beiden Teile Ringstruktur (21) und Außenstutzen (20) und einen mit dem Außenzahnkranz (32) in Eingriff bringbaren Innenzahnkranz (33) am anderen der beiden Teile Ringstruktur (21) und Außenstutzen (20) aufweist.

8. Anschlussstutzen nach einem der Ansprüche 1 bis 7, **dadurch gekennzeichnet, dass** die Ringstruktur (21) einen Innenabsatz (30) und der Außenstutzen (20) einen daran bei seiner Auswärtsbewegung anschlagenden Außenabsatz (31) aufweist.

9. Anschlussstutzen nach einem der Ansprüche 1 bis 8, **dadurch gekennzeichnet, dass** die Ringstruktur (21) eine ringförmige Vertiefung (34) hat, in welche der Außenstutzen (20) bei seiner Einwärtsbewegung eintauchen kann.

10. Anschlussstutzen nach einem der Ansprüche 1 bis 9, **dadurch gekennzeichnet, dass** die ringförmige Vertiefung (34) zwischen dem Faltenbalgabschnitt (35) und der Kupplung (29) liegt.

11. Anschlussstutzen nach einem der Ansprüche 1 bis 10, **dadurch gekennzeichnet, dass** die freien Enden (23, 24) von Innen- und Außenstutzen (19, 20) jeweils einen Endflansch (25, 26) mit einer Überwurfmutter (27, 28) haben.

## Claims

1. A connecting piece for a cryogenic conduit which, for the purpose of vacuum insulation, is passed with circumferential clearance through an evacuable pipe, wherein the connecting piece (2, 3) has an inner piece (19) and an outer piece (20) which surrounds the inner piece with spacing approximately coaxially, wherein the inner piece (19) is connectable to the cryogenic conduit end (7, 8) and the outer piece (20) is connectable to the pipe end (9, 10), wherein inner and outer pieces (19, 20) are connected to one another via a ring structure (21), and wherein the ring structure (21) contains a bellows section (35), **characterised in that** the ring structure (21) is movably connected to the outer piece (20) for axial inward and outward movement via a non-rotatable coupling (29).

2. The connecting piece according to claim 1, **characterised in that** the ring structure (21) connects inner and outer pieces (19, 20) to one another in a tight manner.

3. The connecting piece according to claim 1 or 2, **characterised in that** the ring structure (21) is set back with respect to the free ends (23, 24) of inner and outer pieces (19, 20) .

4. The connecting piece according to any one of claims 1 to 3, **characterised in that** the envelope of the bellows section (35) is approximately cylindrical and runs coaxially and with spacing to the inner and outer piece (19, 20).

5. The connecting piece according to any one of claims 1 to 4, **characterised in that** the outer piece (20) is provided with a bellows sleeve (13, 14) via which the pipe end (9, 10) is connectable to the outer piece (20).

6. The connecting piece according to claim 5, **characterised in that** the bellows sleeve (13, 14) is made from metal, preferably from stainless steel.

7. The connecting piece according to any one of claims 1 to 6, **characterised in that** the coupling (29) has an outer gear rim (32) on one of the two parts ring structure (21) and outer piece (20) and an inner gear rim (33), which can be brought into mesh with the outer gear rim (32), on the other one of the two parts ring structure (21) and outer piece (20).

8. The connecting piece according to any one of claims 1 to 7, **characterised in that** the ring structure (21) has an inner shoulder (30) and the outer piece (20) has an outer shoulder (31) which abuts the inner shoulder during its outward movement.

9. The connecting piece according to any one of claims 1 to 8, **characterised in that** the ring structure (21) has an annular recess (34) into which the outer piece (20) can enter during its inward movement.

10. The connecting piece according to any one of claims 1 to 9, **characterised in that** the annular recess (34) lies between the bellows section (35) and the coupling (29).

11. The connecting piece according to any one of claims 1 to 10, **characterised in that** the free ends (23, 24) of inner and outer pieces (19, 20) each have an end flange (25, 26) with a union nut (27, 28).

## Revendications

1. Raccord pour une conduite cryogénique qui, pour l'isolation sous vide, est passée à travers un tuyau évacuable avec du jeu circonférentiel, où le raccord (2, 3) présente un raccord intérieur (19) et un raccord extérieur (20) entourant le raccord intérieur à distance approximativement coaxialement, où le raccord intérieur (19) peut être relié à l'extrémité de conduite cryogénique (7, 8) et le raccord extérieur (20) peut être relié à l'extrémité de tuyau (9, 10), où les raccords intérieur et extérieur (19, 20) sont reliés l'un à l'autre par le biais d'une structure annulaire (21), et où la structure annulaire (21) contient une section de soufflet (35), **caractérisé en ce que** la structure annulaire (21) est reliée au raccord extérieur (20) de manière amovible pour le mouvement axiale vers l'intérieur et vers l'extérieur par le biais d'un couplage (29) non-rotatif.

2. Raccord selon la revendication 1, **caractérisé en ce que** la structure annulaire (21) relie de manière étanche les raccords intérieur et extérieur (19, 20) l'un à l'autre.

3. Raccord selon la revendication 1 ou 2, **caractérisé en ce que** la structure annulaire (21) est en retrait par rapport aux extrémités libres (23, 24) des raccords intérieur et extérieur (19, 20).

4. Raccord selon l'une quelconque des revendications 1 à 3, **caractérisé en ce que** l'enveloppe de la section de soufflet (35) est approximativement cylindrique et se déroule coaxialement et à distance par rapport au raccord intérieur et extérieur (19, 20).

5. Raccord selon l'une quelconque des revendications 1 à 4, **caractérisé en ce que** le raccord extérieur (20) est pourvu d'une manchette de soufflet (13, 14), via laquelle l'extrémité de tuyau (9, 10) peut être reliée au raccord extérieur (20).

6. Raccord selon la revendication 5, **caractérisé en ce que** la manchette de soufflet (13, 14) est fabriquée en métal, de préférence en acier inoxydable.

7. Raccord selon l'une quelconque des revendications 1 à 6, **caractérisé en ce que** le couplage (29) présente une couronne dentée extérieure (32) sur l'une des deux parties de la structure annulaire (21) et du raccord extérieur (20) et une couronne dentée intérieure (33), qui peut être mise en engrènement avec la couronne dentée extérieure (32), sur l'autre des deux parties de la structure annulaire (21) et du raccord extérieur (20).

8. Raccord selon l'une quelconque des revendications 1 à 7, **caractérisé en ce que** la structure annulaire (21) présente un épaulement intérieur (30) et le raccord extérieur (20) présente un épaulement extérieur (31) qui bute contre l'épaulement intérieur lors de son mouvement vers l'extérieur.

9. Raccord selon l'une quelconque des revendications 1 à 8, **caractérisé en ce que** la structure annulaire (21) a un évidement annulaire (34), dans lequel le raccord extérieur (20) peut s'enfoncer lors de son mouvement vers l'intérieur.

10. Raccord selon l'une quelconque des revendications 1 à 9, **caractérisé en ce que** l'évidement annulaire (34) est situé entre la section de soufflet (35) et le couplage (29).

11. Raccord selon l'une quelconque des revendications 1 à 10, **caractérisé en ce que** les extrémités libres (23, 24) des raccords intérieur et extérieur (19, 20) ont à chaque fois une bride d'extrémité (25, 26) avec un écrou-raccord (27, 28).
